# EUROPÄISCHE PATENTANMELDUNG

(11) **EP 0 920 903 A1**
(43) Veröffentlichungstag der Anmeldung: **09.06.1999**
(21) Anmeldenummer: 98122221.9
(22) Anmeldetag: 23.11.1998
(51) Int. Cl.: B01D 53/84, B01D 53/85

(54) **Biofiltersystem**

(30) Priorität: 02.12.1997 DE 19753409
(71) Anmelder: PRIVATINSTITUT FÜR BIOLOGISCHE SANIERUNG GmbH, 51503 Rösrath (DE)
(72) Erfinder: Greis, Rolf Alfred, 50769 Köln-Seeberg (DE); Bär, Karl Eckart, 51503 Rösrath (DE)
(74) Vertreter: Stachow, E.-W., Prof. Dr.

(57) **Zusammenfassung**

Die Erfindung betrifft ein Biofiltersystem zur Gasreinigung, bestehend aus einem Gehäuse (1) mit Gaseintritts- und Gasaustrittsöffnung (16,18) und einem dazwischen angeordneten Aufnahmeraum zur Aufnahme eines biologisch aktiven Filtermaterials, wobei der Gasvolumenstrom des zu reinigenden Gases durch den Aufnahmeraum über das Filtermaterial geführt wird. Um eine optimale Ausnutzung der Filterkapazität zu erzielen sowie um ein an unterschiedliche Gasvolumenströme einfach anpaßbares Biofiltersystem zu schaffen, wird erfindungsgemäß vorgeschlagen, den Aufnahmeraum in mindestens zwei gasdurchströmbare Kammern (Module 2) zu unterteilen, die jeweils der Aufnahme von Filtermaterial dienen, wobei die Kammern strömungstechnisch hintereinandergeschaltet sind. Die Kammern werden dabei vorzugsweise durch separate Module (2) mit herausnehmbaren, gasdurchlässigen Zwischenböden (4) gebildet, die lösbar und gasdicht miteinander verbunden sind.

## Beschreibung

Die Erfindung betrifft ein Biofiltersystem zur Gasreinigung, bestehend aus einem Gehäuse mit Gaseintritts- und Gasaustrittsöffnungen sowie einem dazwischen angeordneten Aufnahmeraum zur Aufnahme eines biologisch aktiven Filtermaterials, wobei der Gasvolumenstrom des zu reinigenden Gases durch den Aufnahmeraum über das Filtermaterial geführt wird.

Derartige Filtersysteme werden in verschiedenen Bereichen eingesetzt wo gasförmige und/oder flüssige Abluftbestandteile zu beseitigen sind, beispielsweise zur Abluftbehandlung bei Produktionsprozessen, bei der Altlastensanierung zur Reinigung von belasteter Bodenluft, zur Abluftreinigung in Lackierbetrieben oder zur Luftreinigung bzw. Abluftdesodorierung bei der Massentierhaltung.

Es sind derartige Biofiltersysteme bekannt, bei denen der Aufnahmeraum aus einem Container besteht, der im Bodenbereich, beispielsweise am unteren Ende einer Seitenwand, eine Gaseintrittsöffnung und in seinem oberen Bereich eine Gasaustrittsöffnung aufweist. Ein derartiger Container wird zur Gasreinigung mit einem biologisch aktiven Filtermaterial wie Rindenmulch, Kompost, Torf oder dergleichen, gegebenenfalls zusammen mit porösen mineralischen Bestandteilen wie vulkanischem Gestein oder dergleichen, beschickt. Das zu reinigende Gas wird durch das biologisch aktive Filtermaterial geleitet, wodurch mit dem Gasstrom mitgeführte Verunreinigungen von dem Filtermaterial zurückgehalten werden bzw. von in dem Filtermaterial vorhandenen Bakterien zu Kohlendioxid und Wasser umgesetzt werden. Um eine entsprechende Reinigungswirkung zu erzielen, wird das biologisch aktive Filtermaterial üblicherweise in einer Schichthöhe von 150 bis 180 cm eingesetzt. Insgesamt sind somit beträchtliche Mengen an Filtermaterial notwendig. Dabei hat es sich herausgestellt, daß aufgrund der notwendigen großen Schichthöhe an Filtermaterial sich dieses im Laufe der Zeit durch das Eigengewicht verdichtet, wodurch die aktive Oberfläche, die für die Reinigungsleistung maßgeblich ist, verringert wird.

Des weiteren ist bei derartigen Filtersystemen nachteilig, daß diese nicht an unterschiedliche Gasvolumenenströme und Abluftzusammensetzungen anpaßbar sind. Zwar kann die Schichthöhe an Filtermaterial in dem Container variiert werden, der Container hat jedoch stets den gleichen Raumbedarf, auch wenn er nur mit einer vergleichsweise geringen Menge an Filtermaterial beschickt ist. Da die Container üblicherweise für eine Aufnahmemenge von ca. 20 m³ Biomaterial ausgelegt sind, sind hiermit auch entsprechend hohe Investitionskosten verbunden.

Aufgabe der vorliegenden Erfindung ist es daher, ein Biofiltersystem zu schaffen, das eine optimale Ausnutzung des Reinigungsvermögens des Filtermaterials ermöglicht und das mit möglichst geringem konstruktivem Aufwand an unterschiedliche Gasvolumenströme und Zusammensetzungen anpaßbar ist.

Die Aufgabe wird erfindungsgemäß dadurch gelöst, daß der Aufnahmeraum des Biofiltersystems in mindestens zwei gasdurchströmbare Kammern unterteilt ist, die jeweils der Aufnahme von Filtermaterial dienen, wobei die Kammern strömungstechnisch hintereinandergeschaltet sind. Hierdurch ist es möglich, durch die Aneinanderfügung einer beliebigen Anzahl von Filterkammern ein Biofiltersystem zu schaffen, das nahezu beliebig erweitert werden kann und somit auf einfache Weise an unterschiedliche Gasvolumenströme bzw. Belastungen des zu reinigenden Gases anpaßbar ist.

Des weiteren kann bei dem erfindungsgemäßen Biofiltersystem die erforderlich Menge an Filtermaterial auf verschiedene Kammern verteilt werden, wobei der Gasvolumenstrom nacheinander durch die Kammern geführt wird. Dadurch, daß in jeder Filterkammer nur eine vergleichsweise geringe Menge an Filtermaterial vorhanden ist und dieses dementsprechend in jeder Kammer eine nur geringe Schichthöhe einnimmt, wird eine Verdichtung des Filtermaterials aufgrund des Eigengewichtes des Filtermaterials bei hohen Schichtdicken und damit eine Verringerung der Oberflächenaktivität vermieden. Das von dem zu reinigenden Gas durchströmte Filtermaterial kann vielmehr stets in einer vergleichsweise lockeren Schichtung mit hoher aktiver Oberfläche vorliegen, so daß eine optimale Ausnutzung der Reinigungswirkung möglich ist. Es hat sich herausgestellt, daß hierdurch die Menge an Filtermaterial deutlich vermindert werden kann, um den gleichen Reinigungseffekt wie in bisher bekannten Biofiltersystemen zu erzielen, so daß die Biofiltersysteme insgesamt verkleinert und damit sowohl die Baukosten des Biofiltersystems als auch die Betriebskosten, die im wesentlichen Energiekosten darstellen, deutlich verringert werden können.

In einer vorteilhaften Ausführungsform sind die einzelnen Filterkammern übereinander angeordnet und durch horizontale Zwischenböden getrennt, auf denen das Filtermaterial anordenbar ist. Dabei kann das Filtermaterial je nach Ausführungsform sowohl in loser Schüttung auf den Zwischenböden ausgebreitet als auch in geeigneten Aufnahmebehältnissen angeordnet werden.

Vorteilhafterweise ist die Trennwand bzw. der Zwischenboden der Kammern gasdurchlässig ausgeführt, so daß eine besonders einfache Gasführung in vertikaler Richtung möglich ist. Gegebenenfalls kann das zu reinigende Gas aber auch im wesentlichen parallel zu den Zwischenböden in die Filterkammern eingeleitet werden. Gasdurchlässige Zwischenböden können als Roste, Lochbleche oder dergleichen ausgeführt sein, die gegebenenfalls in Abhängigkeit von der Körnung des Filtermaterials auch mit Einlagen, wie engmaschigen Netzen und dergleichen, zu versehen sind. Um eine einfache Wartung sowie Bestückung des Biofiltersystems zu ermöglichen, sind die Trenn- bzw. Zwischenböden einfach demontierbar, beispielsweise nur lose auf entsprechende Halterungen aufgelegt.

Gemäß einer weiteren vorteilhaften Ausführungsform sind die Filterkammern des Biofiltersystems in Form von separaten Modulen ausgeführt, die lösbar und gasdicht aneinander befestigbar sind und nacheinander von dem zu reinigenden Gas durchströmt werden. Die Module können beispielsweise durch Spannverbindungen wie Bügelverschlüsse oder dergleichen aneinander befestigt sein und mittels O-Ring-Dichtungen abgedichtet sein. Durch die Modulbauweise ist eine besonders einfache Anpassung des Biofiltersystems an unterschiedliche Gasvolumenströme sowie eine einfache Wartung möglich.

Die Module können an ihrer Unterseite jeweils einen gasdurchlässigen, vorteilhafterweise herausnehmbaren Boden sowie eine offene Oberseite aufweisen, wobei die Ober- und Unterseiten der Module miteinander gasdicht verbindbar und die Module aneinander befestigbar sind. Der gasdurchlässige Boden eines Moduls kann sich dabei über dessen gesamte Grundfläche erstrecken. Zur Befestigung der Module kann gegebenenfalls eine separate Tragkonstruktion vorgesehen sein oder es können die aneinander befestigten Module an einer Stützkonstruktion abgestützt werden, um insbesondere bei einem vertikal angeordneten Biofiltersystem eine ausreichende Stabilität zu erhalten.

Für viele Anwendungszwecke hat es sich als geeignet erwiesen, 3 bis 10 Module vorzusehen, wobei eine Obergrenze lediglich durch die mechanische Instabilität bei zunehmender Bauhöhe des Filtersystems gegeben ist.

Das Verhältnis des Durchmessers der Grundfläche einer Kammer zu deren Höhe kann zwischen 1,5:1 bis 2,5:1, vorzugsweise 2:1, betragen, wobei gegebenenfalls auch größere oder kleinere Verhältnisse vorgesehen sein können. Es hat sich jedoch herausgestellt, daß bei dem gegebenen Verhältnis von Grundfläche zu Höhe der Module das Biofiltersystem in weiten Grenzen variierbar ist und gleichzeitig eine vergleichsweise geringe Höhe des Filtermaterials beibehalten werden kann, so daß praktisch keine Verdichtungen des Filtermaterials eintreten.

Um den Gasvolumenstrom durch den Aufnahmeraum für Filtermaterial des Biofiltersystems führen zu können, kann das Gehäuse ein separates Kopf- und/oder Fußteil mit Gaseintritt- bzw. Gasaustrittsöffnung aufweisen, wobei Kopf- bzw. Fußteil mit der Oberseite bzw. der Unterseite der Module gasdicht verbindbar sind. Hierdurch kann das modular aufgebaute Biofiltersystem auf besonders einfache Weise in seiner Dimensionierung verändert werden.

Als besonders vorteilhaft hat es sich herausgestellt, den Gaseintritt im Oberteil des Gehäuses und den Gasaustritt im Unterteil des Gehäuses anzuordnen. Hierdurch ist eine strömungstechnisch besonders günstige Gasführung gegeben, bei welcher sich das zu reinigende Gas optimal im Biofiltersystem verteilt und das gesamte Filtervolumen ausgenutzt wird. Dies ist insbesondere dann der Fall, wenn ein Gasbefeuchter vorgesehen ist, um das Filtermaterial zu befeuchten. Durch eine optimale Befeuchtung kann die Reinigungskapazität des Filtermaterials verbessert werden, insbesondere, wenn bei der Gasreinigung die Aktivität von Bakterien von Bedeutung ist, da diese in der Regel in der wässrigen Phase stattfindet.

Ist in einem derartigen System der Gaseintritt im Oberteil des Gehäuses angeordnet, so entspannt sich das Gas beim Eintritt in das Kopfteil des Gehäuses aufgrund der Querschnittserweiterung des Strömungskanals, so daß der Sättigungspunkt überschritten werden kann und sich Wasser abscheidet. Das sich im Oberteil des Gehäuses abscheidende Wasser wird dann durch den Gasstrom und aufgrund der Schwerkraft durch das gesamte Filtersystem geführt und das Filtermaterial über den gesamten Querschnitt sowie über die gesamte Höhe des Filtersystems gleichmäßig befeuchtet. Der Wirkungsgrad des Filtersystems wird hierdurch wesentlich verbessert.

Die Gasbefeuchtung kann beispielsweise durch Eindüsen von Wasser oder dergleichen erfolgen, wobei jedoch meist nur weiches bzw. entsalztes Wasser verwendet werden kann und aufgrund der Verdampfung des Wasses das zu reinigende Gas abgekühlt wird.

Vorteilhafterweise wird zur Gasbefeuchtung ein Wasseraufnahmebehälter mit einem Gaseintritt und einem Gasaustritt eingesetzt, wobei das zu befeuchtende Gas über die Wasseroberfläche geführt oder durch das Wasser hindurchgeleitet wird. Hierdurch sind an die Wasserqualität keine besonderen Anforderungen zu stellen sowie eine apparativ wenig aufwendige und wartungsfreundliche Gasbefeuchtung gegeben.

Zur Gasbefeuchtung kann selbstverständlich auch das überhitzte Gas über bzw. durch ein Wasserreservoir geleitet werden.

Vorteilhafterweise weist der Gasbefeuchter Mittel auf, mittels derer das zu befeuchtende Gas oberhalb der Wasseroberfläche verwirbelt wird oder die Wasseroberfläche vergrößert wird. Hierzu kann oberhalb der Wasseroberfläche zwischen Gaseintritt und Gasaustritt eine Prallplatte vorgesehen sein, die geringfügig oberhalb der Wasseroberfläche endet, oder die Wasseroberfläche kann durch Rührer oder dergleichen aufgewirbelt werden.

Ist der Wasseraufnahmebehälter des Gasbefeuchters beheizbar ausgeführt, so kann das zu befeuchtende Gas auf einfache Weise mit Wasser ge- bzw. übersättigt werden, bevor es über das Filtermaterial geleitet wird.

Es hat sich dabei als vorteilhaft herausgestellt, daß die Wassertemperatur das 1,5 bis 1,8fache der Temperatur des Gasvolumenstroms beträgt. Wird somit die Temperatur des zu reinigenden Gases auf ca. 25 bis 35 °C eingestellt, so beträgt die Wassertemperatur des Gasbefeuchters vorzugsweise 50 bis 60 °C.

Um Wasserverluste im Gasbefeuchter auszugleichen, kann dem Wasseraufnahmebehälter des Gasbefeuchters ein Wasservorratsbehälter zugeordnet sein, der in Abhängigkeit von dem Füllstand im Wasseraufnahmebehälter diesem Wasser zuführt. Hierzu kann eine einfache Schwimmersteuerung vorgesehen sein.

Um sich im Fußteil des Gehäuses ansammelndes Prozeßwasser abzuführen, wird dieses vorteilhafterweise wieder dem Wasseraufnahmebehälter des Gasbefeuchters und/oder dem Wasservorratsbehälter zugeführt. Der Wasservorratsbehälter kann dabei so dimensioniert sein, daß er einen Totraum aufweist, so daß das sich im Fußteil des Biofiltersystems maximal ansammelnde Wasservolumen vom Vorratsbehälter aufgenommen werden kann, auch wenn dieser zur Befüllung des Gasbefeuchters seinen maximalen Füllstand erreicht hat.

Da die beschriebenen Biofiltersysteme oftmals im Freien aufgestellt werden, können in dem Fußteil des Gehäuses sowie in dem Wasservorratsbehälter Heizungen vorgesehen sein, so daß ein ausreichender Frostschutz gewährt ist.

Die Erfindung ist im nachfolgenden beispielhaft erläutert und anhand der Figuren beispielhaft beschrieben. Es zeigen:
- Fig. 1: ein modular aufgebautes Biofiltersystem,
- Fig. 2: Detailansichten der Verbindungsstelle zweier Module gemäß drei verschiedenen Ausführungsformen.
- Fig. 3: den Prozeßwasserkreislauf für ein Biofiltersystem gemäß Fig. 1 und

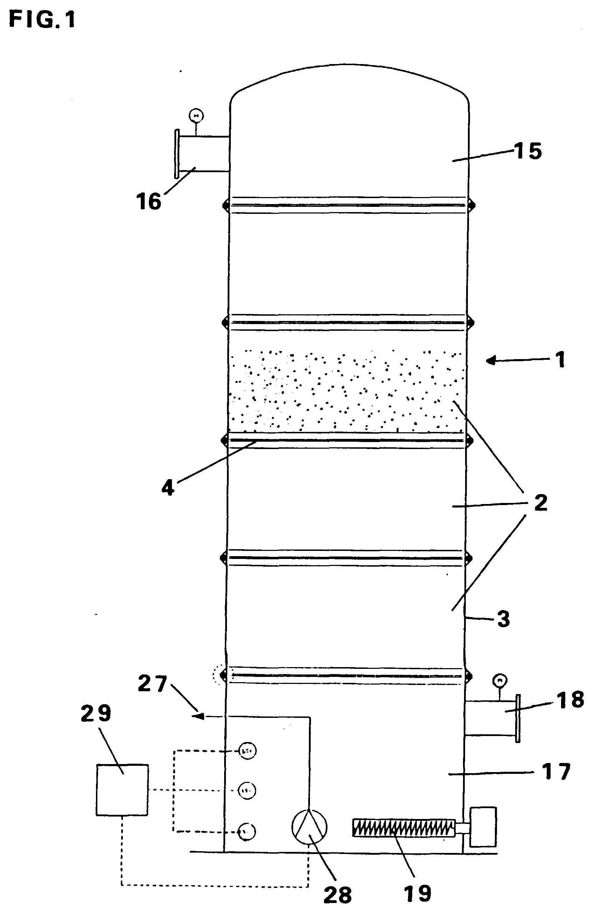

Das Biofiltersystem gemäß Fig. 1 besteht aus einem Gehäuse 1, das aus mehreren Filterkammern in Form von lösbar und gasdicht miteinander verbundenen Modulen 2 zusammengesetzt ist. Die Module 2 weisen jeweils eine zylinderförmige Seitenwand 3 auf; sie werden nach unten hin jeweils von einem gasdurchlässigen Zwischenboden 4 begrenzt und sind an ihrer Obereite 6 offen ausgeführt. Der Zwischenboden 4 ist jeweils als Lochblech ausgeführt und auf einer Querschnittsverengung des Moduls 2 lose aufgelegt. Auf den Lochblechen kann das großvolumige und mehr oder weniger grobkörnige biologisch aktive Filtermaterial aufgeschichtet werden, das beispielsweise Kompost, Rindenmulch, Torf, Lavaschlacke oder dergleichen enthält.

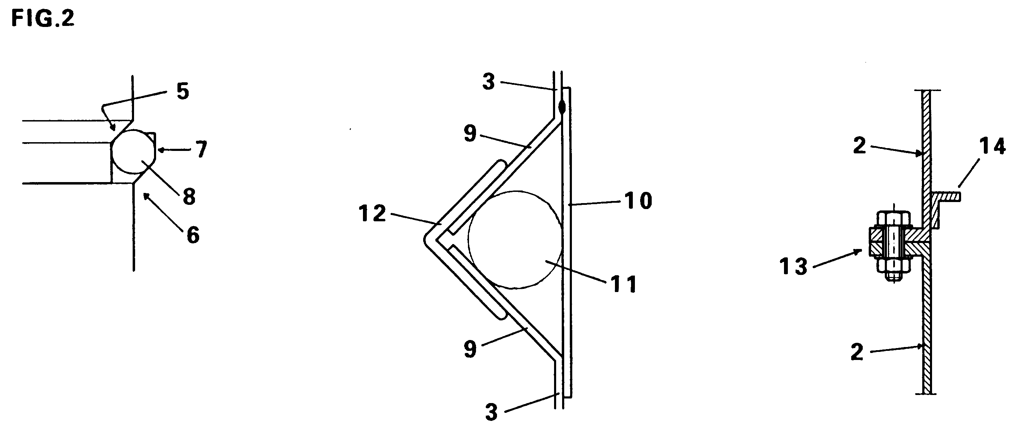

Die Verbindung der Module kann auf unterschiedliche Art und Weise erfolgen. In Fig. 2 sind beipielhaft einige Möglichkeiten aufgezeigt.

Nach einer ersten Ausführungsform (Fig. 2, links) sind die Module an ihrer Unterseite mit einem zurückspringenden Absatz 5 und an ihrer Oberseite 6 mit einem nach außen vorkragenden Bereich 7 versehen, der der Aufnahme eines O-Ringes 8 dient. Auf den Absatz 5 kann ein Zwischenboden 4 aufgelegt werden. Der vorkragende Bereich 7 bildet eine Nut, die mit ihrem freien Ende den O-Ring 8 teilweise übergreift. Der O-Ring 8 liegt dabei an dem Grund der Nut sowie an den Nutflanken an. Der untere Absatz 5 eines Moduls ist dabei so bemessen, daß dieser in den O-Ring eingesetzt werden kann, so daß der O-Ring den Verbindungsbereich der Module abdichtet. Die beiden Module können dabei durch Spannringe oder Spannbügel miteinander verbunden werden.

Gemäß einer weiteren Ausführungsform (Fig. 2, Mitte) sind die Seitenwände 3 der Module an den oberen und unteren Stirnseiten mit nach außen kragenden Bereichen 9 versehen, die hier einstückig angeformt sind und sich vorzugsweise über den gesamten Umfang erstrecken. Die Seitenwand 3 des Moduls ist mit einem nach innen zurückspringende, vollumfänglicher Verbindungsstück 10 nach unten verlängert, welches in das untere Modul mit geringem Spiel eingesteckbar ist und auf das ein Zwischenboden aufgelegt werden kann. Zwischen den beiden vorkragenden Bereichen 9 der Module und dem Verbindungsstück 10 kann ein Dichtring 11 angeordnet werden, welcher durch einen die beiden Kragen 9 beaufschlagenden Spannring 12 dichtend an den Kragen sowie dem Verbindungsstück anliegt.

Die Module 2 können auch gemäß Fig. 2, rechts, mittels einer Flanschverbindung 13 aneinander befestigt werden, die auch ein Dichtungselement aufweisen kann. An der Innenwand des Moduls ist ein Winkelstück 14 angeordnet, das der Auflage von Zwischenböden dient.

Die durch die Module gebildete Filtersäule wird, wie in Fig. 1 dargestellt, durch ein Kopfteil 15 mit einen Gaseintrittsstutzen 16 sowie durch ein Fußteil 17 mit einem Gasaustrittsstutzen 18 abgeschlossen, wobei Kopf- und Fußteil 15, 17 mit den jeweils benachbarten Modulen 2 gasdicht verbunden sind.

In dem Fußteil 17 ist des weiteren eine elektrische Heizung 19 sowie eine Förderpumpe 28 zur Entsorgung von sich im Fußteil ansammelndem Wasser angeordnet.

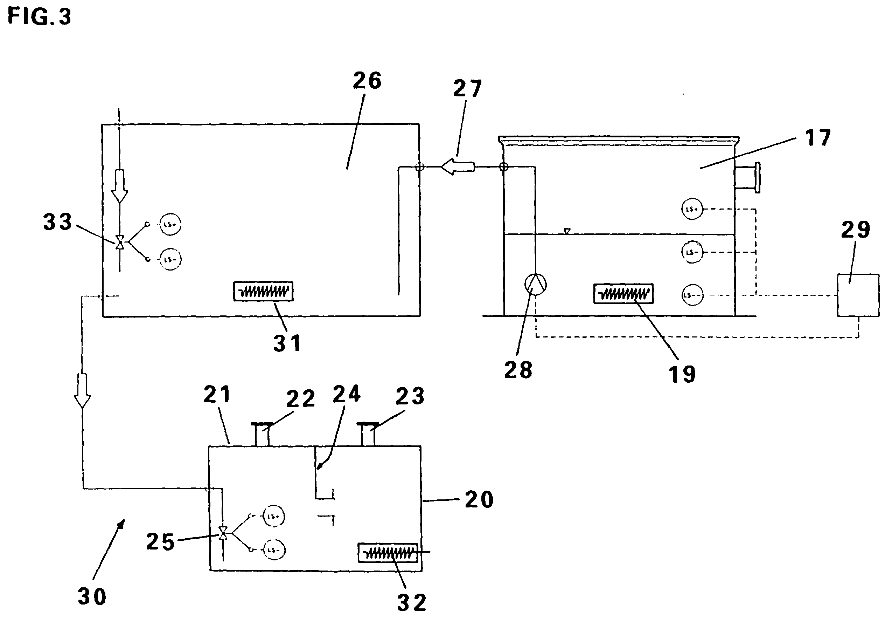

Dem Gaseintrittsstutzen 16 des Biofilters ist ein Gasbefeuchter 30 vorgeschaltet, wie er Fig. 3 zu entnehmen ist. Der Gasbefeuchter weist einen Wasseraufnahmebehälter 20 sowie eine diesen gasdicht verschließende und abnehmbare Deckelplatte 21 auf, die mit einem Gaseinlaß 22 und einem Gasauslaß 23 versehen. Zwischen dem Gaseinlaß und dem Gasauslaß ist in dem Strömungsbereich des zu befeuchtenden Gases ein Prallblech 24 angeordnet. Der Wasseraufnahmebehälter wird befüllt, so daß die Wasseroberfläche mindestens 50 mm unterhalb des Prallbleches steht. Der Wasserstand in dem Aufnahmebehälter 20 kann durch die Schwimmerschaltung 25 eingestellt werden, die ein Füllventil an einem Wasserreservoir betätigt. Aufgrund des in dem Strömungsbereich des Gases hineinragenden Prallbleches wird dieses oberhalb der Wasseroberfläche verwirbelt, wodurch die Befeuchtung des Gases verbessert wird.

Um die durch die Wasserverdunstung erfolgende Abkühlung der Abluft auszugleichen sowie als Frostschutz bei im Freien angeordneten Gasbefeuchtern ist der Wasseraufnahmebehälter 20 durch eine in dessen Inneren angeordnete Heizung 32 beheizbar. Diese ist so ausgelegt, daß eine Wassertemperatur von 50 bis 60°C problemlos erreichbar ist. Durch den Gasbefeuchter kann die relative Luftfeuchtigkeit des zu reinigenden Gases auf 100 % oder auch darüber hinaus erhöht werden, wenn aufgrund des Gasvolumenstromens und der engen Führung über die Wasseroberfläche Wasseranteile mitgerissen werden.

Um in dem Wasseraufnahmebehälter 20 eine konstante Füllhöhe einzustellen, ist dieser flüssigkeitsführend mit einem Vorratsbehälter 26 verbunden, der beispielsweise 200 l Wasser aufnehmen kann, wobei die Wasserförderung zu dem Wasseraufnahmebehälter 20 über ein natürliches Gefälle erfolgt. Der Vorratsbehälter 26 ist ebenfalls mit einer Heizung 31 versehen, die im wesentlichen als Frostsicherung dient, sowie mit einer Schwimmerschaltung 33, die den Wasserzulauf aus dem Ortsnetz oder einem anderen Wasserreservoir regelt. Das Wasser im Vorratsbehälter kann gegebenenfalls auch durch Bakterien angeimpft werden, die in dem Biofiltersystem wirksam sind.

Der Vorratsbehälter 26 kann des weiteren über den Prozeßwasserrücklauf 27 in dem Fußteil 17 des Filtersystems angesammeltes Wasser aufnehmen. Hierzu ist, wie in Fig. 1 dargestellt, in dem Fußteil 17 des Gehäuses eine Förderpumpe 28 vorgesehen, die in Abhängigkeit von der Füllhöhe in dem Fußteil 17 über eine entsprechende Steuerung 29 geregelt dem Vorratsbehälter 26 Wasser zuführt. Die Steuerung 29 ist mit einem Trockenlaufschutz für die Pumpe 28 ausgestattet. Das Wasseraufnahmevolumen des Vorratsbehälters 26 ist dabei so bemessen, daß bei der über die Schwimmerschaltung 33 maximal vorgegebene Füllhöhe die Gesamtmenge an in dem Fußteil 17 angesammelten Prozeßwasser aufgenommen werden kann. Eine Überfüllung des Vorratsbehälters 26 ist somit ausgeschlossen.

Das aus dem Gasbefeuchter austretende zu reinigende Gas, das eine Temperatur zwischen 20 bis 40 °C, vorzugsweise zwischen 25 bis 35°C, aufweist, wird über den Stutzen 16 im Kopfteil 15 des Biofiltersystems zugeführt. Aufgrund der Querschnittserweiterung des Strömungskanals und des hohen relativen Feuchtigkeitsgrades des zu reinigenden Gases scheidet sich Wasser aus, das aufgrund der Verwirbelung des Luftstroms im Kopfteil gleichmäßig über den Querschnitt der Module verteilt wird und aufgrund der Gasströmung sowie der Schwerkraft in vertikaler Richtung absteigend das in den Modulen angeordnete Filtermaterial gleichmäßig befeuchtet. Feuchtigkeitsunterschiede über die Höhe des Biofiltersystems werden so vermieden.

Das erfindungsgemäße Biofiltersystem kann aus zylinderförmigen Modulen bestehen, die z.B. einen Durchmesser von 700 mm sowie eine Höhe von 365 mm aufweisen. Dabei können, je nach dem zu reinigenden Gasvolumenstrom, 3 bis 10 Module zu einem Filtersystem zusammengefaßt werden, wobei die Obergrenze im wesentlichen aufgrund der abnehmenden mechanischen Stabilität bestimmt ist. Um eine Verdichtung des biologisch aktiven Filtermaterials zu verhindern, hat sich das Verhältnis von Durchmesser zu Höhe der Module von ca. 2:1 bewährt. Das Filtermaterial wird in den Modulen vorzugsweise in einer Schichtung von 70 bis 90%, beispielsweise 80 %, beschickt, so daß bei einer Modulhöhe von 365 mm eine Schichthöhe von 300 mm resultiert.

Das erfindungsgemäße Biofiltersystem wird zumeist mit einem geringen Gasüberdruck von bis ca. 0,5 bar, zumeist ca. 0,3 bar betrieben und kann z.B. einen Luftvolumenstrom von 500 bis 1000 m³/h bei einer Lösemittelbelastung von ca. 1000 mg/m³ reinigen. Hiermit ist die Reinigungskapazität je Volumeneinheit verglichen mit herkömmlichen Biofiltersystemen deutlich verbessert.

Des weiteren ist aufgrund der besonderen Gasführung sowie der Anordnung der Zwischenböden, die eine druckverlustfreie Gasströmung ermöglicht, sowie aufgrund der besonderen Ausgestaltung des Gasbefeuchters der Betrieb des Biofiltersystems mit einem ca. 50 % geringerem Energieaufwand verglichen mit herkömmlichen Biofiltersystemen möglich.

Zur Reinigung größerer Gasvolumenströme können auch mehrere Biofiltersysteme parallel zueinander betrieben werden.

### Bezugszeichenliste

- 1: Gehäuse
- 2: Modul
- 3: Seitenwand
- 4: Zwischenboden
- 5: Absatz
- 6: Oberseite
- 7: vorkragender Bereich
- 8: O-Ring
- 9: vorkragender Bereich
- 10: Verbindungsstück
- 11: Dichtring
- 12: Spannring
- 13: Flanschverbindung
- 14: Winkelstück
- 15: Kopfteil
- 16: Gaseintrittsstutzen
- 17: Fußteil
- 18: Gasaustrittsstutzen
- 19: Heizung
- 20: Wasseraufnahmebehälter
- 21: Deckelplatte
- 22: Gaseinlaß
- 23: Gasauslaß
- 24: Prallblech
- 25: Schwimmerschaltung
- 26: Vorratsbehälter
- 27: Prozeßwasserrücklauf
- 28: Förderpumpe
- 29: Steuerung
- 30: Gasbefeuchter
- 31: Heizung
- 32: Heizung
- 33: Schwimmerschaltung

## Patentansprüche

1. Biofiltersystem zur Gasreinigung, bestehend aus einem Gehäuse mit Gaseintritts- und Gasaustrittsöffnung sowie einem dazwischen angeordnetem Aufnahmeraum zur Aufnahme eines biologisch aktiven Filtermaterials, wobei der Gasvolumenstrom des zu reinigenden Gases durch den Aufnahmeraum über das Filtermaterial geführt wird, **dadurch gekennzeichnet**, daß der Aufnahmeraum in mindestens zwei gasdurchströmbare Kammern (Module 2) unterteilt ist, die jeweils der Aufnahme von Filtermaterial dienen, wobei die Kammern (Module 2) strömungstechnisch hintereinandergeschaltet sind.

2. Biofiltersystem nach Anspruch 1, **dadurch gekennzeichnet**, daß die Kammern (Module 2) übereinander angeordnet und jeweils durch einen horizontalen Zwischenboden (4) getrennt sind, auf dem das Filtermaterial anordenbar ist.

3. Biofiltersystem nach Anspruch 1 oder 2, **dadurch gekennzeichnet**, daß die die Kammern (Module 2) trennende Wand (Zwischenboden 4) gasdurchlässig ist.

4. Biofiltersystem nach einem der Ansprüche 1-3, **dadurch gekennzeichnet**, daß die Kammern in Form von lösbar und gasdicht aneinander befestigbaren Modulen (2) zur separaten Aufnahme von Filtermaterial ausgeführt sind, die nacheinander von dem zu reinigenden Gas durchströmbar sind.

5. Biofiltersystem nach Anspruch 4, **dadurch gekennzeichnet**, daß die Module (2) jeweils mit einem gasdurchlässigen Boden (4) und einer offen ausgeführten Oberseite (6) ausgestattet sind und daß die Oberseiten (6) der Module (2) mit den Unterseiten benachbarter Module (2) gasdicht verbindbar und die Module (2) aneinander befestigbar sind.

6. Biofiltersystem nach Anspruch 4 oder 5, **dadurch gekennzeichnet**, daß das Gehäuse (1) aus 3 bis 10 Modulen (2) besteht.

7. Biofiltersystem nach einem der Ansprüche 1-6, **dadurch gekennzeichnet**, daß das Verhältnis des Durchmessers der Grundfläche einer Kammer (Modul 2) zu deren Höhe 1,5:1 bis 2,5:1, vorzugsweise 2:1, beträgt.

8. Biofiltersystem nach einem der Ansprüche 1-7, **dadurch gekennzeichnet**, daß das Gehäuse (1) ein separates Kopfteil (15) und/oder Fußteil (17) mit Gasein- bzw. Gasaustrittsöffnung (16, 18) aufweist, wobei Kopf- und/oder Fußteil (15, 17) mit der Oberseite bzw. der Unterseite der Module gasdicht verbindbar sind.

9. Biofiltersystem nach einem der Ansprüche 1-8, **dadurch gekennzeichnet**, daß der Gaseintritt im Oberteil (Kopfteil 15) des Gehäuses (1) und der Gasaustritt im Unterteil (Fußteil 17) des Gehäuses (1) angeordnet sind.

10. Biofiltersystem nach einem der Ansprüche 1-9, **dadurch gekennzeichnet**, daß ein dem Aufnahmeraum für das Filtermaterial vorgeschalteter Gasbefeuchter (30) zur Befeuchtung des zu reinigenden Gases vorgesehen ist.

11. Biofiltersystem nach einem der Ansprüche 1-10, **dadurch gekennzeichnet**, daß der Gasbefeuchter (30) einen Wasseraufnahmebehälter (20) aufweist und daß eine Gasführung vorgesehen ist, mittels derer das zu befeuchtende Gas über die Wasseroberfläche des in dem Wasseraufnahmebehälter (20) befindlichen Wassers oder durch dieses leitbar ist.

12. Biofiltersystem nach einem der Ansprüche 1-11, **dadurch gekennzeichnet**, daß der Gasbefeuchter (30) Mittel (24) zur Verwirbelung des zu befeuchtenden Gases oberhalb der Wasseroberfläche oder zur Vergrößerung der Wasseroberfläche aufweist.

13. Biofiltersystem nach einem der Ansprüche 11 oder 12, **dadurch gekennzeichnet**, daß der Wasseraufnahmebehälter (20) des Gasbefeuchters (30) beheizbar ist.

14. Biofiltersystem nach einem der Ansprüche 1-13, **dadurch gekennzeichnet**, daß Mittel zur Regelung der Temperatur des Gasvolumenstromes und/oder der Wassertemperatur des Gasbefeuchters vorgesehen sind.

15. Biofiltersystem nach einem der Ansprüche 10-14, **dadurch gekennzeichnet**, daß dem Wasseraufnahmebehälter (20) ein Wasservorratsbehälter (26) vorgeschaltet ist und die Wasserentnahme aus dem Wasservorratsbehälter (26) in Abhängigkeit von dem Füllstand im Wasseraufnahmebehälter (20) regelbar ist.

16. Biofiltersystem nach einem der Ansprüche 1-15, **dadurch gekennzeichnet**, daß das Fußteil (17) des Gehäuses (1) mit dem Wasseraufnahmebehälter (20) und/oder dem Wasservorratsbehälter (26) flüssigkeitsführend verbunden sind.

17. Biofiltersystem nach einem der Ansprüche 1-16, **dadurch gekennzeichnet**, daß in dem Fußteil (17) des Gehäuses (1) eine Förderpumpe (28) und/oder eine Heizung (31) vorgesehen sind.

18. Verfahren zur Reinigung von Abgasen mittels biologisch aktiver Filtermaterialien nach einem der Ansprüche 1-17, wobei der Volumenstrom des zu reinigenden Gases über ein biologisch aktives Filtermaterial geleitet wird, **dadurch gekennzeichnet**, daß der Gasvolumenstrom durch mehrere voneinander getrennte, hintereinandergeschaltete Kammern (Module 2) geführt wird, in denen jeweils das biologisch aktive Filtermaterial vorliegt.

19. Verfahren nach Anspruch 18, **dadurch gekennzeichnet**, daß der Gasvolumenstrom durch mehrere übereinander angeordnete, in Strömungsrichtung hintereinandergeschaltete Kammern (Module 2) geleitet wird.

20. Verfahren nach Anspruch 18 oder 19, **dadurch gekennzeichnet**, daß die Kammern durch luftdurchlässige Trennwände (Zwischenböden 4) getrennt sind und der Gasvolumenstrom durch die Trennwände geleitet wird.

21. Verfahren nach einem der Ansprüche 18-20, **dadurch gekennzeichnet**, daß der Gasvolumenstrom von oben in die Kammern (Module 2) eingeleitet und unten abgeführt wird.

22. Verfahren nach einem der Ansprüche 18-21, **dadurch gekennzeichnet**, daß das zu reinigende Gas vor Eintritt in Filterkammern befeuchtet wird.

23. Verfahren nach einem der Ansprüche 18-22**, dadurch gekennzeichnet**, daß das zu reinigende Gas zur Befeuchtung über oder durch ein Wasserreservoir (20) geleitet wird.

24. Verfahren nach Anspruch 23, **dadurch gekennzeichnet**, daß das Wasserreservoir (20) beheizt wird, wobei die Wassertemperatur vorzugsweise das 1,5 bis 1,8fache der Temperatur des Gasstroms beträgt.

25. Verfahren nach Anspruch 24, **dadurch gekennzeichnet**, daß die Temperatur des Gasstromes 20-40°C, vorzugsweise 25-35°C beträgt.

26. Verfahren nach einem der Ansprüche 18-25, **dadurch gekennzeichnet**, daß in dem Gehäuse (1) sich ansammelndes Prozeßwasser dem Befeuchter (30) oder einem diesen speisenden Wasservorratsbehälter (26) zugeführt wird.
